(19) Europäisches Patentamt / European Patent Office / Office européen des brevets

(11) **EP 2 709 301 A1**

(12) **EUROPEAN PATENT APPLICATION**
published in accordance with Art. 153(4) EPC

(43) Date of publication:
**19.03.2014 Bulletin 2014/12**

(51) Int Cl.:
*H04J 11/00* (2006.01)      *H04B 17/00* (2006.01)
*H04J 99/00* (2009.01)

(21) Application number: **12782961.2**

(22) Date of filing: **27.04.2012**

(86) International application number:
**PCT/JP2012/061388**

(87) International publication number:
**WO 2012/153659 (15.11.2012 Gazette 2012/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2011   JP 2011105499**

(71) Applicants:
• **NEC CASIO Mobile Communications, Ltd.**
  **Kawasaki-shi**
  **Kanagawa 211-8666 (JP)**

• **NTT Docomo, Inc.**
  **Tokyo 100-6150 (JP)**

(72) Inventor: **YOKOTE, Toshimichi**
  **Kawasaki-shi, Kanagawa 211-8666 (JP)**

(74) Representative: **Vossius & Partner**
  **Siebertstrasse 4**
  **81675 München (DE)**

(54) **RECEPTION DEVICE, RECEPTION METHOD, AND COMPUTER PROGRAM**

(57)     Provided are a reception device, a reception method, and a computer program that are capable of high-precision channel estimation using little memory volume. Parameters indicating channel characteristics are estimated from channel estimation values for received signal reference signals; a prescribed coefficient matrix is selected in accordance with the estimated parameters, from among coefficient matrices stored beforehand, said matrix being a coefficient matrix in accordance with a reference signal pattern expanded in the frequency direction; and LMMSE channel estimation is performed using a coefficient included in a range that is a coefficient range arranged in the selected coefficient matrix and corresponds to the received signal reference signal arrangement.

Fig.3

EP 2 709 301 A1

**Description**

{Technical Field}

The present invention relates to a receiver, a receiving method and a computer program.

{Background Art}

In recent years, communication techniques are being remarkably developed and systems for communicating a large amount of data at high speed can be being realized. This is the same for wireless communication, not only for wired communication. That is, there are actively searched and developed next-generation communication systems for wirelessly communicating a large amount of data at high speed and enabling multimedia data such as animations and voices to be used in a mobile terminal device along with wide use of mobile terminal devices such as cell phones.

A communication system using OFDM (Orthogonal Frequency Division Multiplexing) such as LTE (Long Term Evolution) discussed in 3GPP (3rd Generation Partnership Project) is paid attention to as a next-generation communication system. OFDM is a system for dividing a band to be used into a plurality of subcarriers, and assigning and transmitting each data symbol to a respective subcarrier, and the subcarriers are allocated to be mutually orthogonal on a frequency axis, and thus OFDM is excellent in frequency use efficiency. Each subcarrier has a narrow band, and thus impacts due to multipath interference can be restricted, thereby realizing high-speed and large-capacity communication.

On the other hand, in wireless communication, signal distortion due to multipath phasing or the like occurs in a received signal in a wireless communication path (channel). Thus, estimated values of channel characteristics of each subcarrier (which will be called "channel estimates" below) needs to be calculated by use of given reference signals having been multiplexed with data symbols and transmitted, thereby the signal distortion being compensated for in a receiver. If accuracy of channel estimates is low, signal distortion in the channel is not accurately corrected and demodulation accuracy for the received signal becomes lowered. There have been proposed various systems for enhancing accuracy of channel estimates.

2D-LMMSE (Linear Minimum Mean Squared Error) channel estimation is one of the OFDM channel estimation systems. The 2D-LMMSE channel estimation is directed for estimating a channel by multiplying channel estimates of given reference signals allocated in a frequency axis direction and a time axis direction by coefficients of a matrix G calculated from frequency correlation, time correlation and SNR (Signal to Noise Ratio) of the channel.

The 2D-LMMSE channel estimation can be expressed in Formula (1).

{Math. 1}

$$\mathrm{h} = \mathrm{A} \times \underbrace{\left[ \mathrm{B} + \frac{1}{SNR} \mathrm{I} \right]^{-1}}_{\mathrm{G}} \times \mathrm{z}$$

$$\dots (1)$$

Where the vector h indicates a channel estimation result, the vector z indicates channel estimates of reference signals, and the matrix G indicates a matrix made of coefficients derived from channel frequency correlation, time correlation and SNR. The matrix I indicates a unit matrix, the matrix A indicates a correlation matrix between a resource element for channel estimation and the reference signals, and the matrix B indicates a correlation matrix between the reference signals. The matrixes A and B are calculated from the frequency correlation and time correlation of the channel and the distances between the resource element and the reference signals.

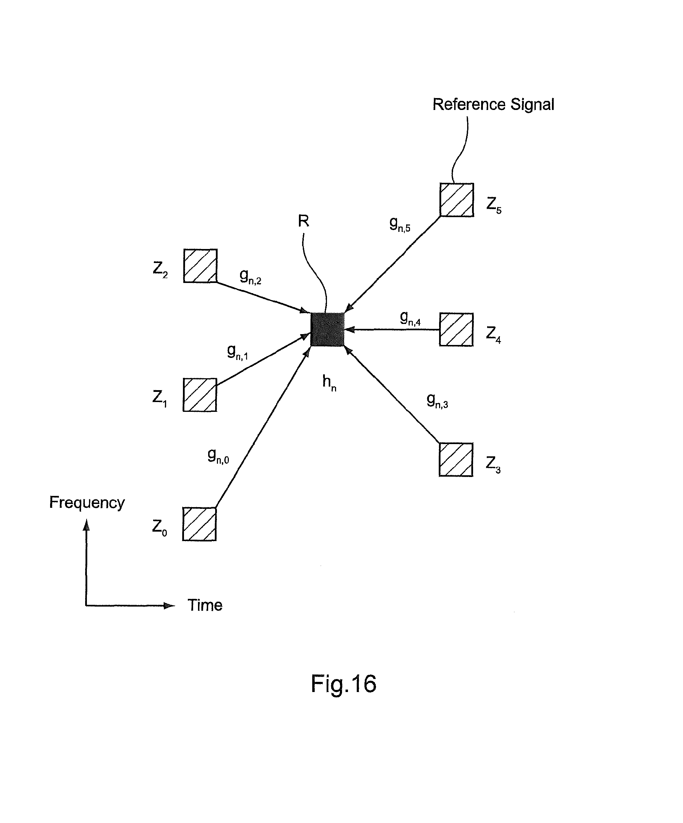

A method for calculating a channel estimate of an n-th resource element (indicated by "R" in Fig. 16) will be described with reference to Fig. 16. There will be described herein a channel estimation using six reference signals allocated in a frequency axis direction and a time axis direction like an LTE (Long Term Evolution) antenna port 5. A channel estimate $h_n$ of the n-th resource element is calculated by multiplying the channel estimates $z_0$, $z_1$, $z_2$, $z_3$, $z_4$, and $z_5$ of the reference signals by corresponding coefficients $g_{n,0}$, $g_{n,1}$, $g_{n,2}$, $g_{n,3}$, $g_{n,4}$, and $g_{n,5}$, respectively, and adding all the resultants as indicated in Formula (2).

{Math. 2}

$$h_n = g_{n,0} \times z_0 + g_{n,1} \times z_1 + g_{n,2} \times z_2 + g_{n,3} \times z_3 + g_{n,4} \times z_4 + g_{n,5} \times z_5$$

...... (2)

Since coefficients as many as reference signals are needed for estimating one resource element, when the total number N indicates the total number of resource elements for channel estimation and the number M indicates the number of reference signals, the matrix G is a remarkable large matrix having N times M elements. As the reference signals to be used for channel estimation increase, the accuracy of the 2D-LMMSE channel estimation is enhanced but the size of the matrix G is larger. An inverse matrix of M times M needs to be calculated for the matrix G, and a remarkably large amount of calculations are needed as the reference signals increase.

Therefore, it is not practical to calculate the matrix G for each channel estimating in terms of the amount of calculations. It is desirable that some channel states (Doppler frequency, delay spread and SNR) are previously set, the matrix G is previously calculated, the calculation result is recorded in a memory, and only the multiplication of the matrix G and the vector z is made for actual channel estimation.

There is conventionally a system in which a user device evaluates various combinations of precoding matrix and delay thereby to determine a combination with the best performance, and can transmit the combination of precoding matrix and delay to a node (see PTL 1, for example).

{Citation List}

{Patent Literature}

{PTL 1} JP 2010-519794 A

{Summary of Invention}

{Technical Problem}

However, the size of the matrix G is remarkably large and some matrixes need to be prepared in preparation for various channel states in order to enhance channel estimation accuracy, and thus a remarkably large memory capacity is needed. Further, LTE employs a scheme for shifting an allocation of reference signals in the frequency axis direction in order to reduce interferences between adjacent cells, when the allocation of reference signals is shifted and the allocation of reference signals is changed per slot, a matrix G needs to be prepared per pattern of an allocation of reference signals, and thus a much larger memory capacity is needed.

It is therefore an object of the present invention to solve the above problem and to provide a receiver, a receiving method, and a computer program capable of making channel estimation with a smaller memory capacity and high accuracy.

{Solution to Problem}

In order to solve the above problem, according to a first aspect of the present invention, there is provided a receiver including: a parameter estimation means which estimates parameters indicating a property of a channel from channel estimates of reference signals in a received signal; a selection means which selects a predetermined coefficient matrix depending on the estimated parameters from previously-stored coefficient matrixes depending on the pattern of the reference signals extended in a frequency axis direction or in a time axis direction; and a channel estimation means which estimates LMMSE (Linear Minimum Mean Squared Error) channel by use of coefficients contained in a range of the coefficients allocated in the selected coefficient matrix depending on the allocation of the reference signals in the received signal.

According to a second aspect of the present invention, there is provided a receiving method including steps of: estimating parameters indicating a property of a channel from channel estimates of reference signals in a received signal; selecting a predetermined coefficient matrix depending on the estimated parameters from previously-stored coefficient matrixes depending on the pattern of the reference signals extended in a frequency axis direction; and estimating LMMSE channel by use of coefficients contained in a range of the coefficients allocated in the selected coefficient matrix depending on the allocation of the reference signals of the received signal.

According to a third aspect of the present invention, there is provided a computer program for causing a computer to execute the processing including: a parameter estimation step of estimating parameters indicating a property of a channel from channel estimates of reference signals of a received signal; a selection step of selecting a predetermined coefficient matrix depending on the estimated parameters from previously-stored coefficient matrixes depending on a pattern of reference signals extended in a frequency axis direction; and a channel estimation step of making LMMSE channel estimation by use of coefficients contained in a range of the coefficients allocated in the selected coefficient matrix depending on an allocation of reference signals of a received signal.

{Advantageous Effects of Invention}

There are provided, by the present invention, a receiver capable of estimating a channel, a receiving method and a computer program with a small memory capacity and high accuracy.

{Brief Description of Drawings}

Fig. 1 is a block diagram illustrating a structure of a transmitter.
Fig. 2 is a block diagram illustrating a structure of a receiver.
Fig. 3 is a block diagram illustrating an exemplary structure of a channel estimation unit 26.
Fig. 4 is a flowchart for explaining a LMMSE channel estimation processing.
Fig. 5A and Fig. 5B are diagrams illustrating exemplary patterns of reference signals.
Fig. 6 is a diagram illustrating exemplary operations of a matrix G.
Fig. 7A and Fig. 7B are diagrams illustrating exemplary patterns of reference signals.
Fig. 8 is a diagram illustrating exemplary operations of a matrix G.
Fig. 9A and Fig. 9B are diagrams illustrating exemplary patterns of reference signals.
Fig. 10 is a diagram illustrating exemplary operations of a matrix G.
Fig. 11A and Fig. 11B are diagrams illustrating exemplary patterns of reference signals.
Fig. 12 is a diagram illustrating exemplary operations of a matrix G.
Fig. 13A and Fig. 13B are diagrams illustrating exemplary patterns of reference signals.
Fig. 14 is a diagram illustrating exemplary operations of a matrix G.
Fig. 15 is a block diagram illustrating an exemplary structure of computer hardware.
Fig. 16 is a diagram for explaining how to find a channel estimate of an n-th resource element.

{Description of Embodiments}

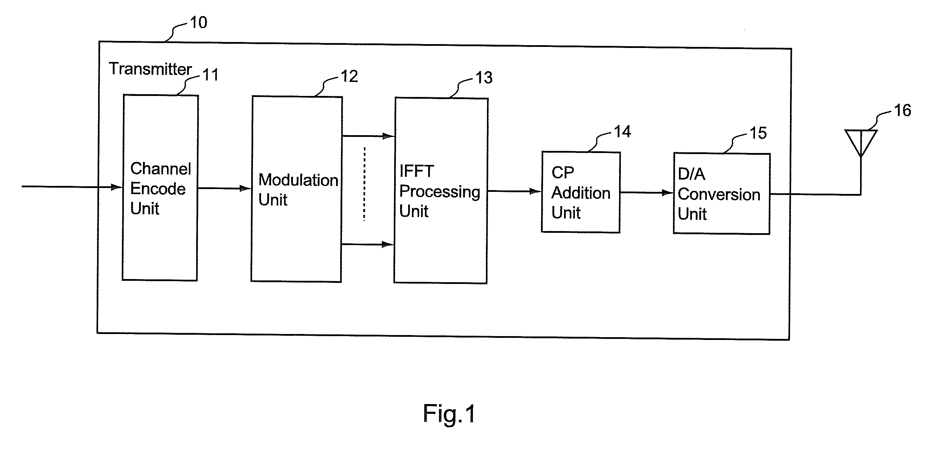

A receiver according to one embodiment of the present invention will be described below with reference to Fig. 1 to Fig. 15 by way of 3GPP (3rd Generation Partnership Project) LTE.
Fig. 1 is a block diagram illustrating a structure of a typical LTE transmitter. A transmitter 10 includes a channel encode unit 11, a modulation unit 12, an IFFT (Inverse Fast Fourier Transform) processing unit 13, a CP (Cyclic Prefix) addition unit 14, a D/A (Digital/Analog) conversion unit 15, and a transmission antenna 16.
In the transmitter 10, transmission data to each user is first subjected to error detection encoding and error correction encoding in the channel encode unit 11. The modulation unit 12 maps the transmission data into an I component and a Q component. Then, the IFFT processing unit 13 converts the I component and the Q component into signal waves in a time domain. The CP addition unit 14 adds CP to the head of an OFDM symbol in order to prevent an impact of inter-symbol interference due to a multipath. The D/A conversion unit 15 converts the OFDM symbol added with the CP from a digital signal into an analog signal. The analog signal is transmitted from the transmission antenna 16.

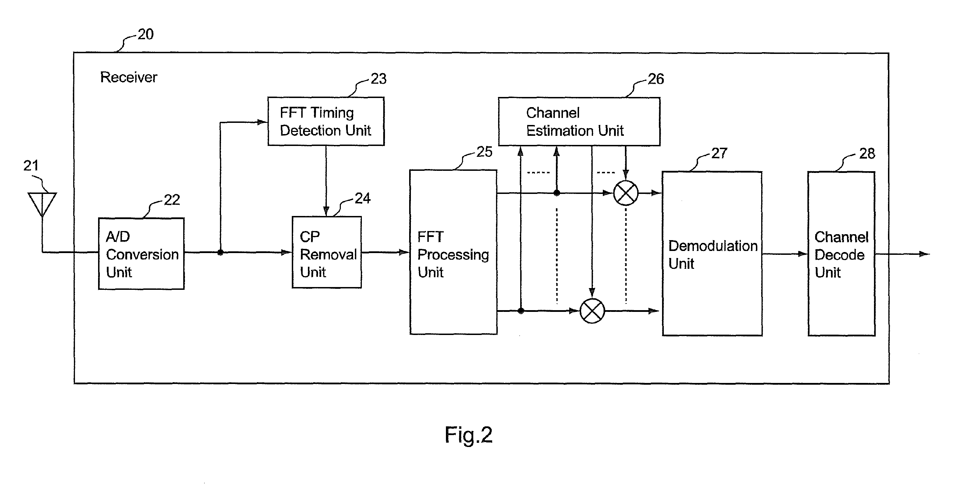

Fig. 2 is a block diagram illustrating a structure of a LTE receiver. A receiver 20 is an exemplary receiver, and includes a receiving antenna 21, an A/D (Analog/Digital) conversion unit 22, a FFT (Fast Fourier Transform) timing detection unit 23, a CP removal unit 24, a FFT processing unit 25, a channel estimation unit 26, a demodulation unit 27, and a channel decode unit 28.
In the receiver 20, a signal received at the receiving antenna 21 is converted from an analog signal to a digital signal in the A/D conversion unit 22. The digital signal is supplied to the FFT timing detection unit 23 and the CP removal unit 24. The FFT timing detection unit 23 detects a timing of the head of the OFDM symbol, and supplies FFT timing information indicating the timing of the head of the OFDM symbol to the CP removal unit 24.
The CP removal unit 24 removes the CP added to the head from the OFDM symbol based on the FFT timing information detected in the FFT timing detection unit 23. The FFT processing unit 25 converts a signal wave (digital signal) in the time domain into each subcarrier component.
The channel estimation unit 26 calculates a channel estimate of each subcarrier by using of given reference signals having been multiplexed with data symbols and transmitted. In the demodulation unit 27, the received signal of each subcarrier is multiplied by complex conjugate of the channel estimates to be compensated for signal distortion suffered in that channel (channel equalization). The demodulation unit 27 converts the received signal of each subcarrier, compensated for channel influence and comprising an I component and a Q component into likelihood information. The channel decode unit 28 performs error correction decoding and error detection thereby to acquire received data.

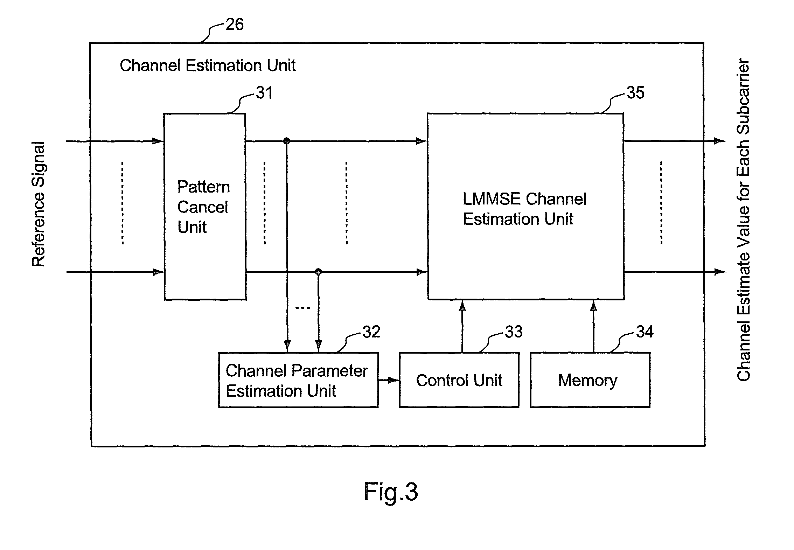

Fig. 3 is a block diagram illustrating an exemplary configuration of the channel estimation unit 26. The channel estimation unit 26 includes a pattern cancel unit 31, a channel parameter estimation unit 32, a control unit 33, a memory 34, and an LMMSE channel estimation unit 35.

In the channel estimation unit 26, the pattern cancel unit 31 first cancels a pattern of the reference signals having been multiplexed with the data symbols and transmitted, thereby to calculate channel estimates of the reference signals.

Then, the channel estimates of the reference signals are supplied to the channel parameter estimation unit 32 and the LMMSE channel estimation unit 35. The channel parameter estimation unit 32 estimates a Doppler frequency, delay spread, SNR or the like of the channel for selecting the most suitable matrix G from a group of previously-prepared matrixes G, and notifies the estimation result to the control unit 33. The control unit 33 selects the most suitable matrix G for a current channel situation based on the parameters (estimation result) estimated in the channel parameter estimation unit 32, and notifies it to the LMMSE channel estimation unit 35. The memory 34 stores the matrix G for each value of the parameter such as Doppler frequency, delay spread or SNR.

The LMMSE channel estimation unit 35 estimates an LMMSE channel by use of the selected matrix G in response to an instruction of the control unit 33.

The control unit 33 instructs the LMMSE channel estimation unit 35 to shift, invert or rotate the matrix G stored in the memory 34 for use depending on an allocation of the reference signals. In the following descriptions, a term "pattern" will be used as a pattern of an allocation of the reference signals for simplicity

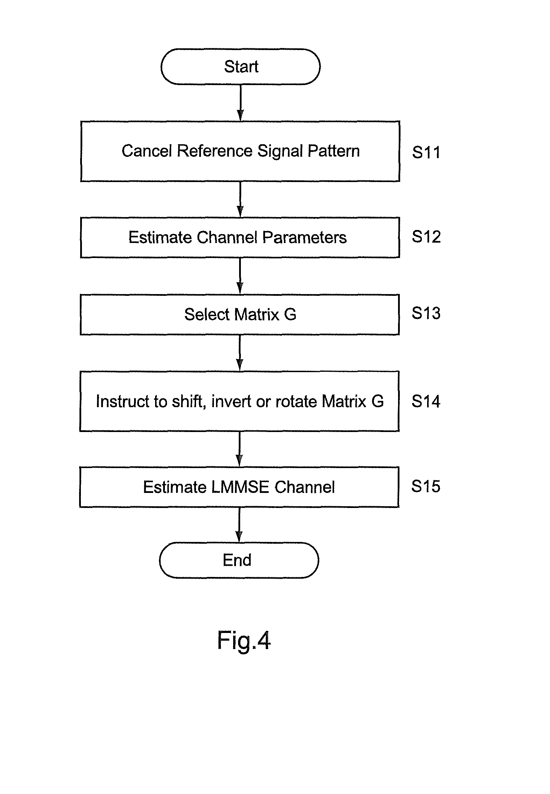

Fig. 4 is a flowchart for explaining the LMMSE channel estimation processing. In step S11, the pattern cancel unit 31 cancels the pattern of the reference signals. In step S12, the channel parameter estimation unit 32 estimates the channel parameters such as a channel's Doppler frequency, delay spread or SNR.

In step S13, the control unit 33 selects a matrix G based on the estimated parameters. In step S14, the control unit 33 instructs the LMMSE channel estimation unit 35 to shift, invert or rotate the matrix G. In step S15, the LMMSE channel estimation unit 35 estimates an LMMSE channel by use of the selected matrix G in response to an instruction of the control unit 33, and then the LMMSE channel estimation processing ends.

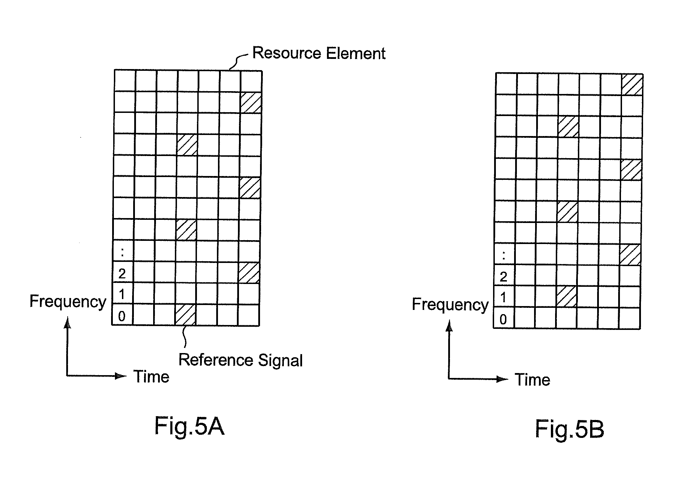

For example, reference signals of a LTE antenna port 5 take either allocation indicated in Fig. 5A or Fig. 5B. Three patterns in which reference signals are shifted in the frequency axis direction are present in order to reduce interferences between adjacent cells. The patterns are discriminated by a parameter $v_{shift}$ which can take $v_{shift} = 0$, $v_{shift} = 1$ or $v_{shift} = 2$. Fig. 5A is a diagram illustrating an allocation of the pattern with parameter $v_{shift} = 0$. Fig. 5B is a diagram illustrating an allocation of the pattern with parameter $v_{shift} = 1$.

In terms of the lower-left zeroth resource element, a reference signal is separated from the zeroth resource element by three resource elements in the time axis direction (indicated by a shaded square in Fig. 5A, and the same shall apply hereinafter) in the allocation of the pattern illustrated in Fig. 5A. To the contrary, a reference signal is separated from the zeroth resource element by three resource elements in the time axis direction and separated therefrom by one resource element in the frequency axis direction in the allocation of the pattern illustrated in Fig. 5B. In this way, a distance between each resource element and a reference signal is different between the parameter $v_{shift} = 0$ and the parameter $v_{shift} = 1$, and thus a matrix G needs to be individually prepared depending on a respective pattern.

However, with careful observation of Fig. 5A and Fig. 5B, it can be seen that the position relationship between the zeroth resource element and the six reference signals in Fig. 5A is the same as the position relationship between the first resource element and the six reference signals in Fig. 5B.

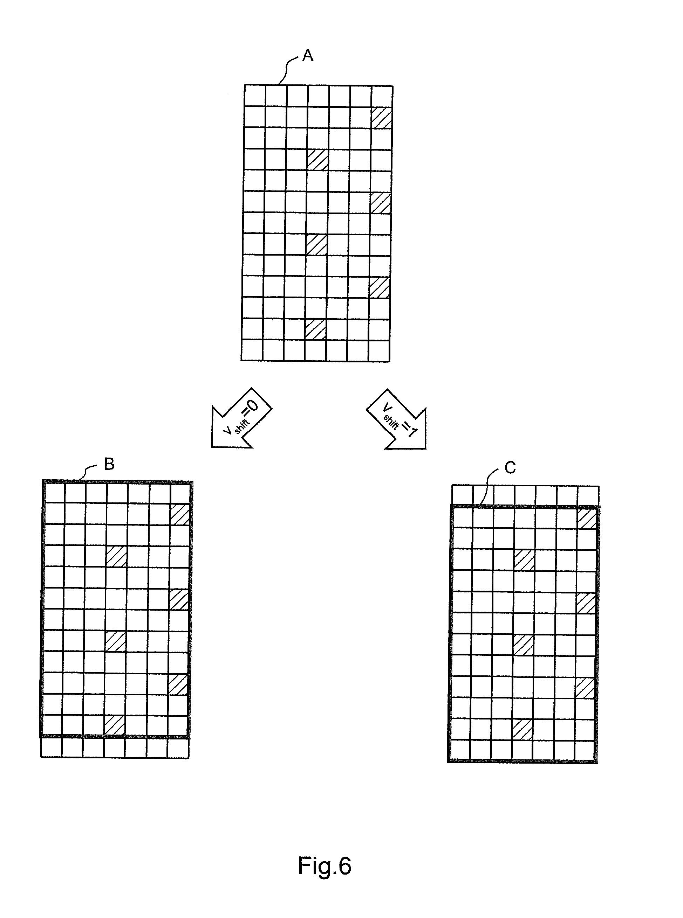

Therefore, a matrix G made of 13 times 7 coefficients is prepared for the reference signal pattern extended in the frequency axis direction (extended such that the 13 resource elements are allocated in the frequency axis direction and the seven resource elements are allocated in the time axis direction) as illustrated in A of Fig. 6, and a range to be used may be shifted depending on a value of the parameter $v_{shift}$. That is, the coefficients in the range of 12 times 7 on the upper side of the matrix G are used as illustrated in B of Fig. 6 with the parameter $v_{shift} = 0$, and the coefficients in the range of 12 times 7 on the lower side of the matrix G may be used as illustrated in C of Fig. 6 with the parameter $v_{shift} = 1$.

In the receiver 20, the matrix G extended in the frequency axis direction is stored in the memory 34, and the control unit 33 notifies which to use the upper-side coefficients of the extended matrix G or the lower-side coefficients thereof to the LMMSE channel estimation unit 35 depending on the allocation of the reference signals or the value of the parameter $v_{shift}$.

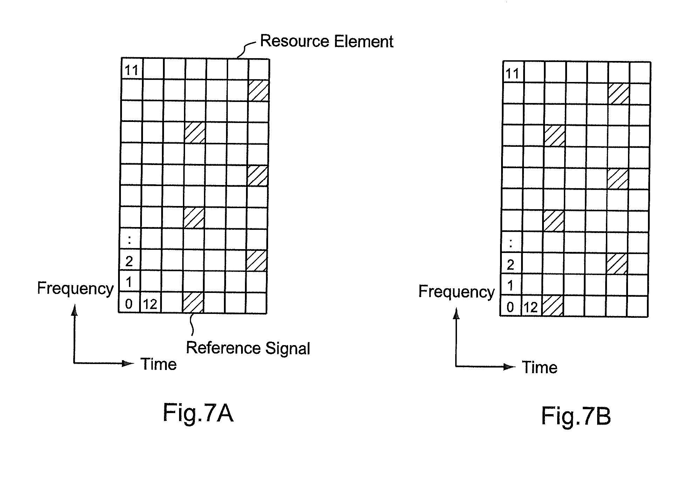

The reference signals of the LTE antenna port 5 are different in OFDM symbols in which the reference signals are allocated between the first-half slot of a subframe and the second-half slot thereof as illustrated in Fig. 7A and Fig. 7B. The reference signals are allocated in the fourth and seventh OFDM symbols in the first-half slot illustrated in Fig. 7A while the reference signals are allocated in the third and sixth OFDM symbols in the second-half slot illustrated in Fig. 7B. In this case, in terms of the lower-left zeroth resource element, a reference signal is separated from the zeroth resource element by three resource elements in the time axis direction in the allocation illustrated in Fig. 7A while a reference signal is separated from the zeroth resource element by two resource elements in the time axis direction in the allocation illustrated in Fig. 7B, and thus a matrix G needs to be individually prepared for the first-half slot and the second-half slot.

However, with careful observation of Fig. 7A and Fig. 7B, it can be seen that the position relationship between the zeroth resource element and the six reference signals in Fig. 7B is the same as the position relationship between the twelfth resource element and the six reference signals in Fig. 7A.

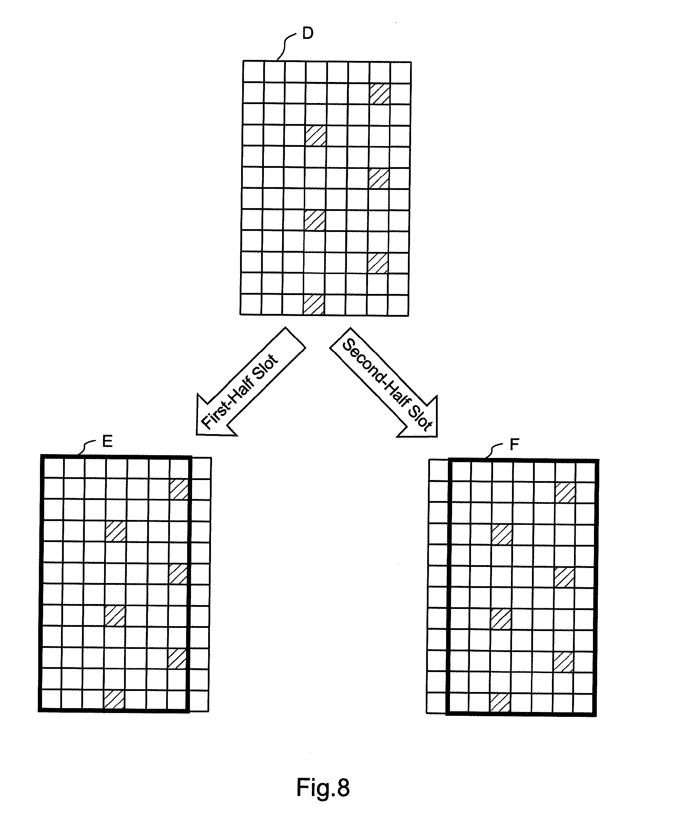

Therefore, a matrix G made of 12 times 8 coefficients is prepared for the reference signal pattern extended in the time axis direction (extended such that the 12 resource elements are allocated in the frequency axis direction and the eight resource elements are allocated in the time axis direction) as illustrated in D of Fig. 8, and a range to be used may be shifted between the first-half slot and the second-half slot. That is, for the first-half slot, the coefficients in the range of 12 times 7 on the front side of the matrix G (the left side of the figure) may be used as illustrated in E of Fig. 8, and for the second-half slot, the coefficients in the range of 12 times 7 on the rear side of the matrix G (the right side of the Figure) may be used as illustrated in F of Fig. 8.

In the receiver 20, the matrix G extended in the time axis direction is stored in the memory 34, and the control unit 33 notifies which to use the front side of the extended matrix G or to use the rear side thereof to the LMMSE channel estimation unit 35 depending on the first-half slot or the second-half slot.

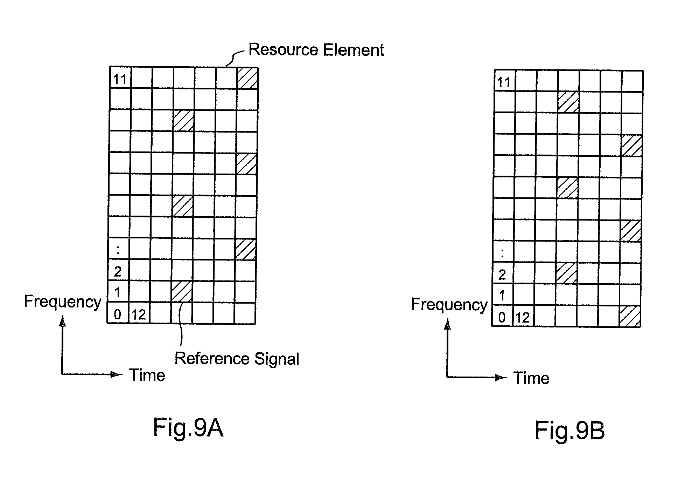

Further, as illustrated in Fig. 9A and Fig. 9B, for the reference signals of the LTE antenna port 5, the allocation of the pattern with the parameter $\nu_{shift} = 2$ is different from the allocation of the pattern with the parameter $\nu_{shift} = 0$ or the pattern with the parameter $\nu_{shift} = 1$ simply shifted in the frequency axis direction.

The reference signals in the fourth OFDM symbol are allocated at lower frequencies with the parameter $\nu_{shift} = 0$ or the parameter $\nu_{shift} = 1$ as illustrated in Fig. 9A, but the reference signals in the seventh OFDM symbol are allocated at lower frequencies with the parameter $\nu_{shift} = 2$ as illustrated in Fig. 9B.

In this case, in terms of the lower-left zeroth resource element, a reference signal is separated from the zeroth resource element by three resource elements in the time axis direction and separated therefrom by one resource element in the frequency axis direction in the allocation illustrated in FIG. 9A while a reference signal is separated from the zeroth resource element by three resource elements in the time axis direction and separated therefrom by two resource elements in the frequency axis direction in the allocation illustrated in Fig. 9B. In this way, the distance between each resource element and a reference signal is different depending on the parameter $\nu_{shift} = 0$ or the parameter $\nu_{shift} = 1$ and the parameter $\nu_{shift} = 2$ and thus individual matrix G needs to be prepared depending on each pattern.

However, with careful observation of Fig. 9A and Fig. 9B, it can be seen that the position relationship between the zeroth resource element and the reference signals in Fig. 9A is the same as the vertically-inverted (inverted in the frequency axis direction) position relationship between the 11th resource element and the reference signals in Fig. 9B.

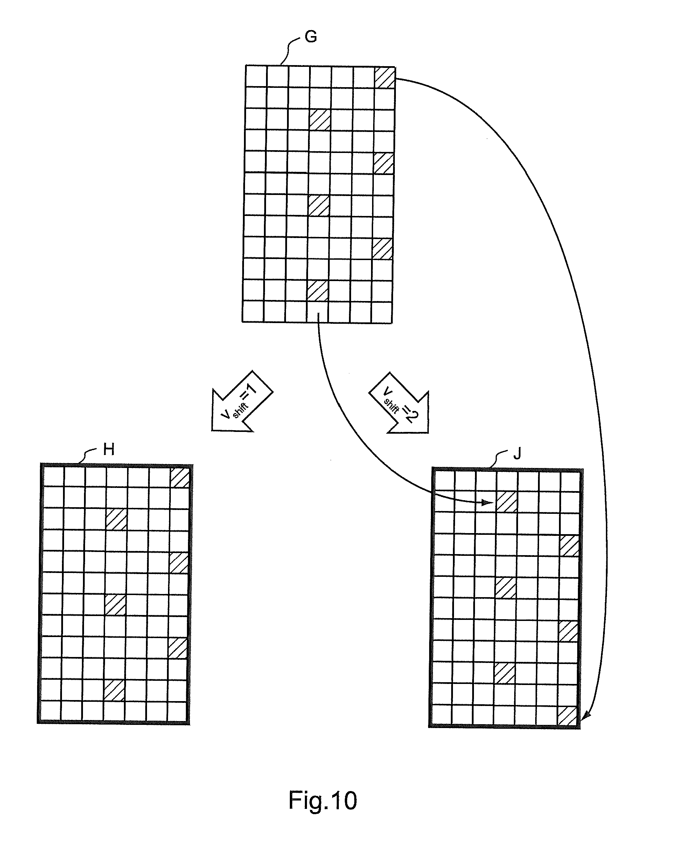

Therefore, a matrix G is prepared for the reference signal pattern with the parameter $\nu_{shift} = 1$ as illustrated in G of Fig. 10, and a matrix G inverted in the frequency axis direction may be used with the parameter $\nu_{shift} = 2$. That is, a matrix G is used as it is with the parameter $\nu_{shift} = 1$ as illustrated in H of Fig. 10, and a matrix G inverted in the frequency axis direction (inverted in the vertical direction in the Figure) may be used with the parameter $\nu_{shift} = 2$ as illustrated in J of Fig. 10.

In the receiver 20, the matrix G is stored in the memory 34, and the control unit 33 notifies whether to use the matrix G as it is or to use the matrix G inverted in the frequency axis direction to the LMMSE channel estimation unit 35 depending on an allocation of the reference signals or a value of the parameter $\nu_{shift}$. When a matrix G inverted in the frequency axis direction is used, the LMMSE channel estimation unit 35 multiplies the channel estimates of the reference signals by the complex conjugates of the coefficients based on the nature of the matrix G.

As described above, for the LMMSE channel estimation, a coefficient matrix for the LMMSE channel estimation is shifted or inverted so that one coefficient matrix is used for allocating a plurality for reference signals.

Assuming the allocations of the reference signals illustrated in Fig. 5, the number of resource elements for channel estimation is 12 subcarriers times 7 OFDM symbols = 84. Coefficients for six reference signals are needed for LMMSE channel estimation of each resource element, and thus the total number of coefficients contained in the matrix G is 12 subcarriers times 7 OFDM symbols times 6 reference signals = 504.

Coefficients need to be prepared for both the parameter $\nu_{shift} = 0$ and the parameter $\nu_{shift} = 1$, and thus 1008 coefficients, which is twice, are needed.

On the other hand, when a matrix G is prepared for the reference signal pattern extended in the frequency axis direction and a range to be used is shifted for use depending on a value of the parameter $\nu_{shift}$, coefficients for one additional subcarrier may be prepared, and thus the number of required coefficients is 13 subcarriers times 7 OFDM symbols times 6 reference signals = 546, which is almost half, thereby reducing the memory capacity for storing the coefficients to almost half.

Similarly, assuming the allocations of the reference signals illustrated in Fig. 7, when a matrix G is individually prepared for the first-half slot and the second-half slot, 1008 coefficients are needed. On the other hand, when a matrix G is prepared for the reference signal pattern extended in the time axis direction and a range to be used is shifted between the first-half slot and the second-half slot, coefficients for one additional OFDM symbol may be prepared and thus the number of required coefficients is 12 subcarriers times 8 OFDM symbols times 6 reference signals = 576.

Assuming the allocations of the reference signals illustrated in Fig. 9, when a matrix G is individually prepared for the parameter $v_{shift}$ = 1 and the parameter $v_{shift}$ = 2, 1008 coefficients are required, but if one matrix G inverted in the frequency axis direction is used, 504 coefficients, which is half, are enough.

Further, one extended matrix G can cope with all the patterns in combination of the shift in the frequency axis direction, the shift in the time axis direction and the inversion in the frequency axis direction. In this case, conventionally, 12 subcarriers times 7 OFDM symbols times 6 reference signals times 3 types times 2 slots for the first-half and second-half slots = 3024 coefficients are needed.

To the contrary, the receiver 20 requires 13 subcarriers times 8 OFDM symbols times 6 reference signals = 624 coefficients, and thus the number of required coefficients is about one fifths of the usual number, and the memory capacity for storing the coefficients can be reduced to about one fifths.

A matrix G shifted in the frequency axis direction, a matrix G shifted in the time axis direction, and a vertically inverted matrix G have been described above by way of example, but the matrix G is not limited thereto.

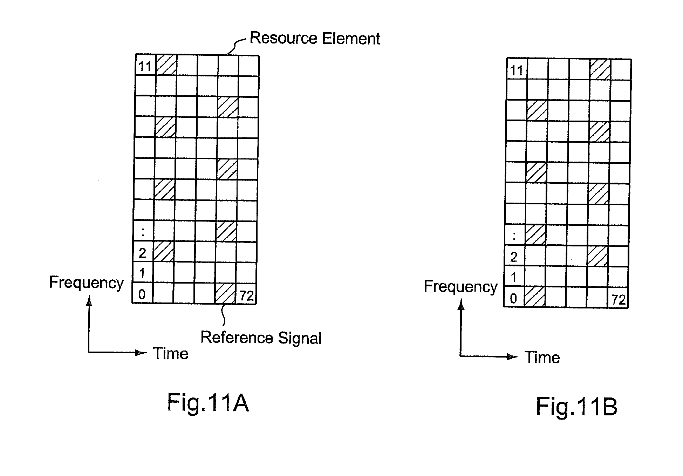

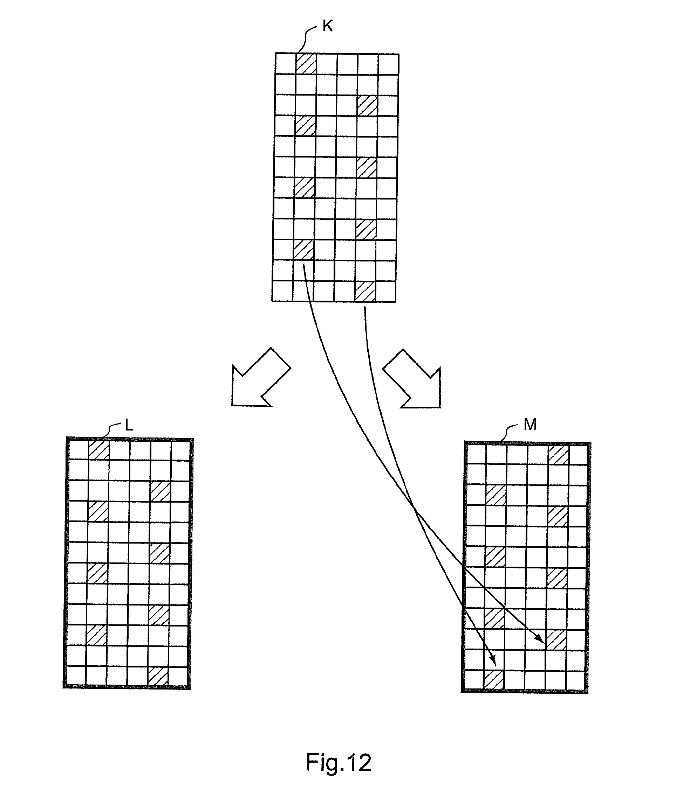

It can be seen that for the reference signal patterns as illustrated in Fig. 11B and Fig. 11B, the position relationship between the zeroth resource element and the reference signals in Fig. 11A is the same as the horizontally-inverted position relationship between the 60th resource element and the reference signals in Fig. 11B. Therefore, a matrix G is prepared for the reference signal pattern illustrated in FIG. 11 A as illustrated in K of Fig. 12, the matrix G may be used as it is as illustrated in L of Fig. 12 for the reference signal pattern illustrated in Fig. 11A, and the horizontally-inverted matrix G may be used as illustrated in M of Fig. 12 for the reference signal pattern illustrated in Fig. 11B.

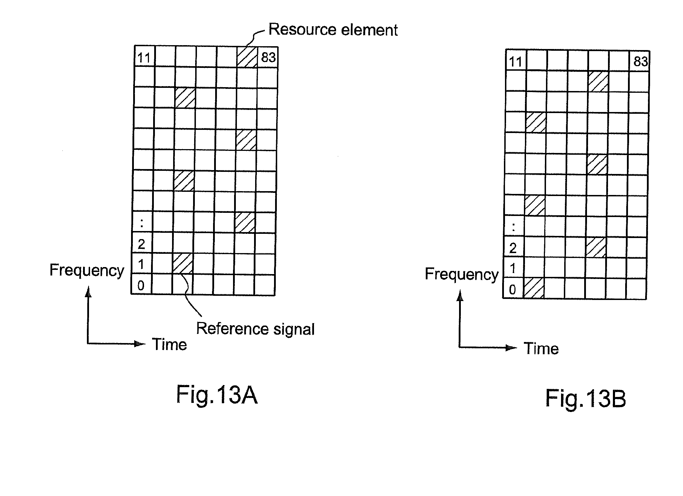

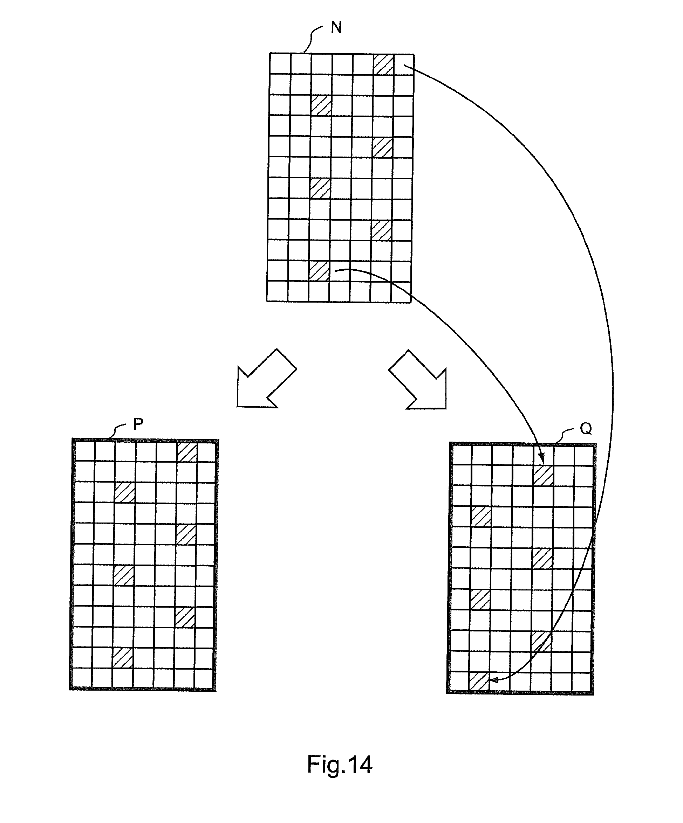

It can be seen that for the reference signal patterns as illustrated in Fig. 13A and Fig. 13B, the position relationship between the zeroth resource element and the reference signals in Fig 13A is the same as the position relationship rotated by 180 degrees between the 83th resource element and the reference signals in Fig. 13B. Therefore, a matrix G is prepared for the reference signal pattern of Fig. 13A as illustrated in N of Fig. 14, the matrix G may be used as it is as illustrated in P of Fig. 14 for the reference signal pattern illustrated in Fig. 13A, and the matrix G rotated by 180 degrees may be used as illustrated in Q of Fig. 14 for the reference signal pattern illustrated in Fig. 13B.

Similarly, rotation by 90 degrees, rotation by 270 degrees or the like can be assumed depending on an allocation of the reference signals.

The 2D-LMMSE channel estimation has been described by way of example in the above description. 1D-LMMSE channel estimation using only reference signals in the same OFDM symbol can be similarly applied. In this case, a matrix G can be shifted in the frequency axis direction or can be vertically inverted.

Further, the LMMSE channel estimation has been described in the above description, but the estimation is not necessarily limited thereto. Channel estimation by previously calculating coefficients to be multiplied by reference signals and storing them in the memory can be similarly applied to channel estimation using other algorithm.

LTE discussed for 3GPP has been described above by way of example, but the system is not necessarily limited thereto. The system can be similarly applied to other wireless communication system using OFDM.

In this way, for LMMSE (Linear Minimum Mean Squared Error) channel estimation, one coefficient matrix is used for allocating a plurality of reference signals by shifting, inverting or rotating the coefficient matrix for LMMSE channel estimation, thereby to reduce the memory capacity for storing the coefficients.

The receiver 20 conforming to LTE discussed in 3GPP has been described by way of example. The present invention can be applied to a cell phone, a data communication card, a PHS (Personal Handyphone System) terminal, a PDA (Personal Data Assistance, Personal Digital Assistants) terminal, a smartphone or a receiver of a communication device in a wireless base station.

A series of processing described above can be executed in hardware or executed in software. When the series of processing is executed in software, a computer program configuring the software is installed from a program recording medium into a computer incorporated in dedicated hardware or a general-purpose personal computer capable of executing various functions by installing various computer programs.

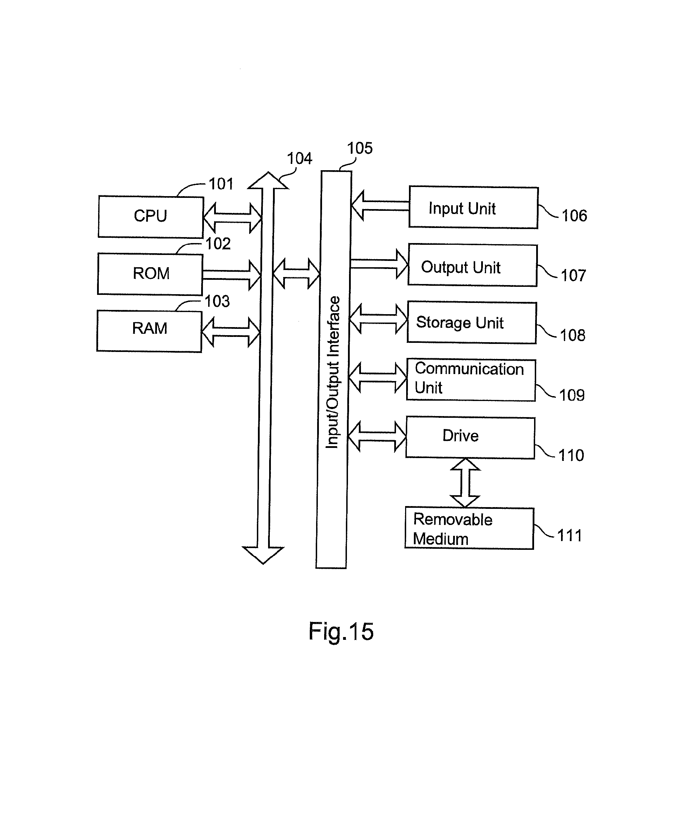

Fig. 15 is a block diagram illustrating an exemplary structure of computer hardware for executing the series of processing by the program.

In the computer, a CPU (Central Processing Unit) 101, a ROM (Read Only Memory) 102 and a RAM (Random Access Memory) 103 are mutually connected via a bus 104.

The bus 104 is additionally connected with an input/output interface 105. The input/output interface 105 is connected with an input unit 106 configured of keyboard, mouse or microphone, an output unit 107 configured of display or speaker, a storage unit 108 configured of hard disc or nonvolatile memory, a communication unit 109 configured of network interface, and a drive 110 for driving a removable medium 111 such as magnetic disc, optical disc, magneto-optical disc or semiconductor memory.

In the thus-configured computer, the CPU 101 loads and executes the computer program stored in the storage unit 108 in the RAM 103 via the input/output interface 105 and the bus 104, for example, and thus the series of processing is executed.

The program to be executed by the computer (CPU 101) is recorded in the removable medium 111 as a package medium such as magnet disc (including flexible disc), optical disc (such as CD-ROM (Compact Disc-Read Only Memory) or DVD (Digital Versatile Disc)), magneto-optical disc or semiconductor memory or is provided via a wired or wireless transmission medium such as local area network, Internet or digital satellite broadcast.

The removable medium 111 is mounted on the dive 110 so that the computer program can be stored in the storage unit 108 via the input/output interface 105 thereby to be installed in the computer. The computer program is received in the communication unit 109 and stored in the storage unit 108 via a wired or wireless transmission medium, thereby to be installed in the computer. Additionally, the computer program is previously stored in the ROM 102 or the storage unit 108, thereby to be previously installed in the computer.

The program to be executed by the computer may be a program in which the processing is performed in a time sequence in the order described in the present specification, or a program in which the processing is performed in parallel or at required timings such as in response to a call.

An embodiment according to the present invention is not limited to the above embodiment, and can be variously changed within the scope without departing from the spirit of the present invention.

{Reference Signs List}

20···Receiver, 21···Receiving antenna, 22···A/D conversion unit, 23···FFT timing detection unit, 24···CP removal unit, 25···FFT processing unit, 26···Channel estimation unit, 27···Demodulation unit, 28···Channel decode unit, 31···Pattern cancel unit, 32···Channel parameter estimation unit, 33···Control unit, 34···Memory, 35···LMMSE channel estimation unit, 101···CPU, 102···ROM, 103···RAM, 108···Storage unit, 109···Communication unit, 111···Removable medium

**Claims**

1. A receiver comprising:

   a parameter estimation means which estimates parameters indicating a property of a channel from channel estimates of reference signals of a received signal;
   a selection means which selects a predetermined coefficient matrix depending on the estimated parameters from previously-stored coefficient matrixes depending on a pattern of reference signals extended in a frequency axis direction or time axis direction;
   and
   a channel estimation means which estimates an LMMSE (Linear Minimum Mean Squared Error) channel by use of coefficients contained in a range of the coefficients allocated in the selected coefficient matrix depending on an allocation of reference signals of a received signal.

2. The receiver according to claim 1, wherein the channel estimation means inverts the coefficients allocated in the selected coefficient matrix in the frequency axis direction, and estimates an LMMSE channel by use of the inverted coefficients.

3. The receiver according to claim 1, wherein the channel estimation means inverts the coefficients allocated in the selected coefficient matrix in the time axis direction, and estimates an LMMSE channel by use of the inverted coefficients.

4. The receiver according to claim 1, wherein the channel estimation means rotates the coefficients allocated in the selected coefficient matrix, and estimates an LMMSE channel by use of the rotated coefficients.

5. The receiver according to claim 1, wherein the channel estimation means estimates a 2D-LMMSE channel.

6. The receiver according to claim 1, wherein the channel estimation means estimates a 1D-LMMSE channel.

7. The receiver according to claim 1, wherein the received signal is received in the OFDM (Orthogonal Frequency Division Multiplexing) system.

8. The receiver according to claim 1, wherein the received signal conforms to LTE (Long Term Evolution).

9. A receiving method comprising steps of:

   estimating parameters indicating a property of a channel from channel estimates of reference signals of a received signal;
   selecting a predetermined coefficient matrix depending on the estimated parameters from previously-stored coefficient matrixes depending on a pattern of reference signals extended in a frequency axis direction; and
   estimating an LMMSE channel by use of coefficients contained in a range of the coefficients allocated in the selected coefficient matrix depending on an allocation of reference signals of a received signal.

10. A computer program for causing a computer to execute the processing including steps of:

    estimating parameters indicating a property of a channel from channel estimates of reference signals of a received signal;
    selecting a predetermined coefficient matrix depending on the estimated parameters from previously-stored coefficient matrixes depending on a pattern of reference signals extended in a frequency axis direction; and
    estimating an LMMSE channel estimation by use of coefficients contained in a range of the coefficients allocated in the selected coefficient matrix depending on an allocation of reference signals of a received signal.

Fig.1

Receiver 20

21

22 — A/D Conversion Unit

23 — FFT Timing Detection Unit

24 — CP Removal Unit

25 — FFT Processing Unit

26 — Channel Estimation Unit

27 — Demodulation Unit

28 — Channel Decode Unit

Fig.2

Fig.3

```
                    ┌─────────────┐
                    │    Start    │
                    └──────┬──────┘
                           │
                           ▼
        ┌──────────────────────────────────┐
        │   Cancel Reference Signal Pattern │   S11
        └──────────────────┬───────────────┘
                           │
                           ▼
        ┌──────────────────────────────────┐
        │     Estimate Channel Parameters   │   S12
        └──────────────────┬───────────────┘
                           │
                           ▼
        ┌──────────────────────────────────┐
        │          Select Matrix G          │   S13
        └──────────────────┬───────────────┘
                           │
                           ▼
        ┌──────────────────────────────────┐
        │ Instruct to shift, invert or rotate Matrix G │   S14
        └──────────────────┬───────────────┘
                           │
                           ▼
        ┌──────────────────────────────────┐
        │       Estimate LMMSE Channel      │   S15
        └──────────────────┬───────────────┘
                           │
                           ▼
                    ┌─────────────┐
                    │     End     │
                    └─────────────┘
```

## Fig.4

Resource Element

Frequency

0
1
2
:

Time

Reference Signal

Fig.5A

Frequency

0
1
2
:

Time

Fig.5B

Fig.6

Resource Element

Frequency

Reference Signal

Time

Fig.7A

Frequency

Time

Fig.7B

Fig.8

Resource Element

Frequency

Time

Reference Signal

Fig.9A

Frequency

Time

Fig.9B

Fig.10

Resource Element

Frequency

11

2
1
0   72

Time

Reference Signal

Fig.11A

Frequency

11

2
1
0   72

Time

Fig.11B

Fig.12

Fig.13A

Fig.13B

Fig.14

Fig.15

Fig.16

## INTERNATIONAL SEARCH REPORT

| International application No. |
| --- |
| PCT/JP2012/061388 |

A.   CLASSIFICATION OF SUBJECT MATTER
*H04J11/00*(2006.01)i, *H04B17/00*(2006.01)i, *H04J99/00*(2009.01)i

According to International Patent Classification (IPC) or to both national classification and IPC

B.   FIELDS SEARCHED

Minimum documentation searched (classification system followed by classification symbols)
H04J11/00, H04B17/00, H04J99/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | Farzad Foroughi Abari et al., 'Low complexity channel estimation for LTE in fast fading environments for implementation on multi-standard platforms', Vehicular Technology Conference Fall (VTC 2010-Fall), 2010 IEEE 72nd, 2010.09.06, pp. 1-5 | 1-10 |
| Y | WO 2009/131142 A1 (Sharp Corp.), 29 October 2009 (29.10.2009), paragraphs [0041] to [0044], [0080]; fig. 4 & US 2011/0038398 A1   & EP 2270995 A1 & CN 102017432 A | 1-10 |

|☒| Further documents are listed in the continuation of Box C. | ☐ See patent family annex. |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 June, 2012 (14.06.12) | 26 June, 2012 (26.06.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/061388

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2010/011018 A1  (LG ELECTRONICS INC.),<br>28 January 2010 (28.01.2010),<br>fig. 15, 16<br>& JP 2011-517516 A      & US 2010/0020890 A1<br>& EP 2301214 A           & KR 10-2010-0010463 A<br>& CN 101990750 A | 1-10 |
| Y | JP 2010-187193 A  (Sharp Corp.),<br>26 August 2010 (26.08.2010),<br>fig. 6<br>(Family: none) | 2 |
| Y | JP 2009-303214 A  (Zaidan Hojin Industrial<br>Technology Research Institute),<br>24 December 2009 (24.12.2009),<br>fig. 15B<br>& US 2009/0323838 A1     & EP 2134050 A2<br>& CN 101610585 A          & KR 10-2009-0129344 A<br>& TW 201012142 A | 3 |
| A | WO 2009/124513 A1  (MEDIATEK INC.),<br>15 October 2009 (15.10.2009),<br>fig. 9A, 9B<br>& JP 2011-519513 A      & US 2009/0257519 A1<br>& US 2009/0257520 A1     & EP 2277294 A<br>& CN 101682607 A          & TW 201010365 A<br>& TW 201010366 A          & TW 200947993 A | 1-10 |

Form PCT/ISA/210 (continuation of second sheet) (July 2009)

**EP 2 709 301 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010519794 A